**Europäisches Patentamt**

**European Patent Office**

**Office européen des brevets**

(19)

(11) Veröffentlichungsnummer: **0 250 852**
**B1**

(12)
# EUROPÄISCHE PATENTSCHRIFT

(45) Veröffentlichungstag der Patentschrift:
05.12.90

(51) Int. Cl.⁵: **F16H 3/00**, F16K 31/04

(21) Anmeldenummer: 87107499.3

(22) Anmeldetag: 22.05.87

(54) Doppeltwirkender Drehantrieb für ein Stellorgan.

(30) Priorität: 02.06.86 DE 3618508
05.02.87 DE 3703478

(43) Veröffentlichungstag der Anmeldung:
07.01.88 Patentblatt 88/1

(45) Bekanntmachung des Hinweises auf die Patenterteilung:
05.12.90 Patentblatt 90/49

(84) Benannte Vertragsstaaten:
AT CH DE FR GB IT LI NL

(56) Entgegenhaltungen:
EP-A- 193 776
DE-C- 862 537

(73) Patentinhaber: Siemens Aktiengesellschaft,
Wittelsbacherplatz 2, D-8000 München 2(DE)

(72) Erfinder: Schabert, Hans-Peter, Dipl.-Ing.,
Friedrich-Bauer-Strasse 28, D-8520 Erlangen(DE)
Erfinder: Laurer, Erwin, Dipl.-Ing., Frankenstrasse 5,
D-8521 Möhrendorf(DE)
Erfinder: Strickroth, Erich, Zeidelweide 8b,
D-8520 Erlangen(DE)
Erfinder: Lippert, Roland, Händelstrasse 22,
D-8510 Fürth(DE)

## Beschreibung

Die Erfindung betrifft einen doppeltwirkenden Drehantrieb für ein Stellorgan mit einer in Form eines Anschlags festgelegten Endstellung, mit einem Motor und einem drehmomentverändernden Getriebe, wobei dem Getriebe ein Mitnehmer zugeordnet ist, der nach einem Teil des gesamten Drehwegs eine drehmomenterhöhende Wirkung des Getriebes aufhebt oder eine drehmomenterniedrigende Wirkung einschaltet, und wobei eine Rücklaufsperre vorhanden ist, die entriegelt wird, bevor der Mitnehmer wirksam wird, und wobei das Getriebe ein Planetengetriebe mit einem feststehenden Gehäuse, einem darin umlaufenden Hohlkranz, mindestens einem Planetenrad, einem Planetenträger und einem Sonnenrad ist.

Ein solcher doppeltwirkender Drehantrieb ist im Dokument DE-C 862 537 beschrieben. Dort ist ein Drehantrieb gezeigt, der an einem Hohlkranz eine Bremse zum Gehäuse hin besitzt, die beim Überschreiten eines vorgegebenen Drehmomentes am Antrieb durchrutscht und dann ein Signal zum Abschalten des Motors liefert. Diese Drehmomentbegrenzung durch Durchrutschen kann während eines vorgegebenen Drehwinkels verhindert werden, indem die Bremse durch Sperrklinken so lange blockiert wird, bis diese am Ende des Drehwinkels durch einen Vorsprung gelöst werden. Dabei ist ein als Nocke ausgebildeter Mitnehmer vorgesehen, der über eine Klinke den Hohlkranz am Verdrehen im Gehäuse hindert. Diese bekannte Ausführung besitzt eine große Anzahl von Bauelementen.

Drehantriebe der genannten Art werden insbesondere zur Betätigung von Armaturen eingesetzt, d.h. von Ventilen, Schiebern, Klappen oder dergleichen, mit denen Strömungswege freigegeben oder gesperrt werden. Die Endstellung ist dabei durch die geschlossene Stellung der Armatur vorgegeben, in der das bewegliche Verschlußglied, z.B. ein Ventilteller, gegen einen Anschlag, nämlich den Ventilsitz, läuft. Dabei ergibt sich, wie in der EP-A 139 776, die die Priorität der älteren DE-A 3 507 091 aufweist, dargelegt ist, das Problem, daß beim Anlaufen an den Anschlag große Haltekräfte entstehen, die beim Öffnen der Armatur überwunden werden müssen. Diese Haltekräfte können bei langen Stillstandszeiten besonders durch Korrosion oder dergl. noch ansteigen und dann den normalen Antrieb womöglich überfordern. Ähnliche Probleme können auftreten, wenn der Drehantrieb zum Betätigen von Bremsen, Spannbacken, Türen oder dergleichen eingesetzt wird.

Der Erfindung liegt die Aufgabe zugrunde, eine besonders raumsparende und dennoch kräftige Ausführung eines Drehantriebs der eingangs genannten Art anzugeben.

Erfindungsgemäß sind bei einem Drehantrieb der genannten Art auf dem Hohlkranz zwei Sperrglieder angeordnet, die dessen Drehung in je eine Richtung annähernd vollständig sperren, und auf dem Planetenträger sitzen ein oder zwei Vorsprünge, die nur jeweils eines der beiden Sperrglieder entriegeln.

Im Gegensatz zu der bekannten Ausführung gemäß der DE-C 862 537 werden bei der Erfindung die Sperrklinken und der Mitnehmer anders eingesetzt. Bei dem erfindungsgemäßen Drehantrieb blockiert der Mitnehmer das Planetengetriebe in sich, indem er nach Durchlaufen seines vorgegebenen Drehwinkels den Planetenträger gegenüber dem Hohlkranz oder gegenüber dem Sonnenrad koppelt. Der erfindungsgemäße Drehantrieb verliert durch Eingreifen des Mitnehmers seine drehmomenterhöhende Wirkung, der Abtrieb geht dadurch in einen Schnellgang über, der bei der Anwendung als Ventilantrieb erhebliche Vorteile bringt, da dort auf schnelle Druckänderungen rasch reagiert werden muß. Bei der bekannten Ausführung dagegen tritt ein Schnellgang nicht in Funktion. Durch das Durchrutschen der Bremse entsteht vielmehr nur ein Energieverlust.

Bei der Erfindung wirkt das Getriebe als "Losreißgetriebe". Das damit erhöhte Drehmoment dient nämlich nur zum Überwinden der erhöhten Festreibung in den Endstellungen. Dies bedeutet, daß über den größten Teil des Stellweges mit der höheren Normalgeschwindigkeit gefahren wird, so daß die Endstellungen sehr viel schneller erreicht werden. Dabei kann das Getriebe einmal eine drehmomentverstärkende Wirkung für einen hochtourigen, drehmomentschwachen Motor ausüben. Man kann aber auch mit einem drehmomentstarken, niedrigtourigen Motor arbeiten, dessen Drehzahl mit dem Getriebe bei Drehmomentverringerung für den Schnellgang des Stellweges erhöht wird.

Da das Getriebe mechanisch wirksam wird, werden nicht mehr wie beim bekannten besondere elektrische Steuermittel benötigt, mit denen sonst in Nähe der Endstellung bzw. beim Erreichen eines erhöhten Drehmoments abgesteuert wurde. Vielmehr genügt bei der Erfindung nur eine einfache Zuleitung, die bei einem Elektromotor in Form eines Zuleitungskabels zu diesem, z.B. als Drehstromkabel ausgeführt sein kann. Die einfache Steuerung ist aber auch dann vorteilhaft, wenn ein Druckmittelmotor, also z.B. ein Hydraulikantrieb oder eine Preßluftturbine oder dergl. eingesetzt wird.

Außerdem läßt sich die Erfindung bei der Bauweise mit Sperrklinken sehr kompakt ausführen. Dies bedeutet, daß das bei kleinen Armaturen, z.B. bis Nennweite 50 mm, oft beobachtete größenmäßige Mißverhältnis zwischen Armatur und Stellantrieb verschwindet. Gleichzeitig ist der Leistungsbedarf des Losreißgetriebes gering, weil keine nennenswerten Reibungen im Getriebe auftreten, im Vergleich zu den üblichen Stellantrieben mit einer Wanderschnecke, deren Wirkungsgrad niedrig liegt.

Weitere Einzelheiten der Erfindung sind in den Unteransprüchen aufgeführt. Sie werden anhand der folgenden Beschreibung eines Ausführungsbeispiels noch näher erläutert. Die zugehörige Zeichnung zeigt in

Fig. 1 eine maßstäbliche Übersichtsdarstellung eines Drehantriebes nach der Erfindung in Verbindung mit einem Ventil,

Fig. 2 einen Schnitt längs der Drehachse durch ein Losreißgetriebe nach der Erfindung,

Fig. 3 eine Einzelheit aus der Figur 2,

Fig. 4 einen Schnitt durch das Losreißgetriebe rechtwinklig zur Drehachse,

Fig. 5 eine Ausführungsform eines Losreißgetriebes mit einem Vorgelege in einem Schnitt längs der Drehachse,

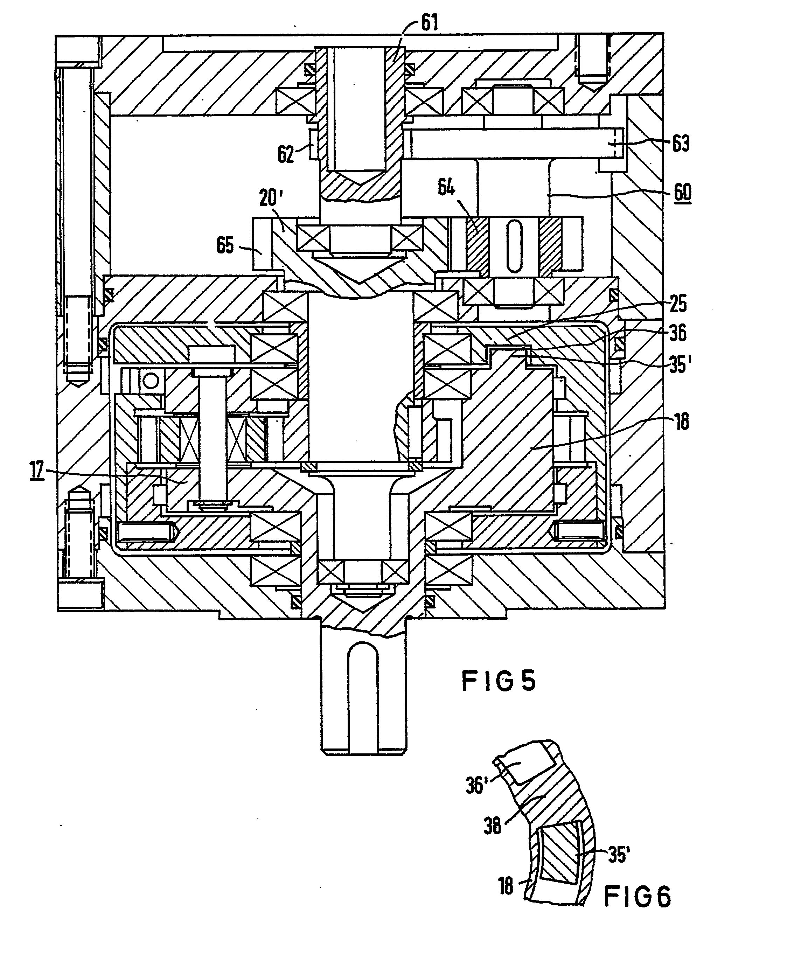

Fig. 6 eine Einzelheit aus der Figur 5,

Fig. 7 eine Teildarstellung aus dem Getriebe mit Vorgelege nach Fig. 5,

Fig. 8 einen zur Darstellung der Figur 7 senkrechten Teilschnitt,

Fig. 9 einen anderen Teilschnitt zu der Figur 7,

Fig. 10 einen ersten Teilschnitt längs der Drehachse aus der Figur 5,

Fig. 11 einen zweiten Teilschnitt aus der Figur 5,

Fig. 12 noch ein weiteres Ausführungsbeispiel eines Losreißgetriebes in einem Schnitt längs der Drehachse,

Fig. 13 eine vereinfachte Darstellung eines Kniehebels als Mitnehmer,

Fig. 14 eine vereinfachte Form eines Rollenfreilaufs als Mitnehmer und

Fig. 15 ein Kniehebel als Mitnehmer, der ohne Schwenkachse auskommt.

FIG 16 einen Schnitt längs der Drehachse durch ein Losreißgetriebe, das gegenüber der Darstellung der FIG 1 in seinem Bauvolumen gegenüber dem Motor und dem Ventil um den Faktor 1,5 verkleinert ist.

FIG 17 einen Mitnehmer in einem Teilschnitt rechtwinklig zur Drehachse.

FIG 18 einen Schnitt rechtwinklig zur Drehachse.

FIG 19 ein Sperrglied in einem Teilschnitt rechtwinklig zur Drehachse.

FIG 20 eine Rückstellrolle in einen Teilschnitt rechwinklig zur Drehachse.

FIG 21 einen vereinfachten Teilschnitt rechtwinklig zur Drehachse mit einer Meßeinrichtung für das am Getriebe wirkende Drehmoment.

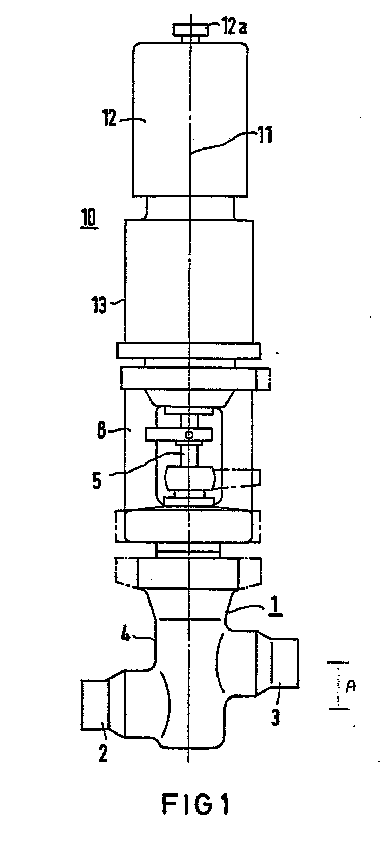

Das in Figur 1 dargestellte Ventil 1 ist ein Absperrventil mit einer Nennweite von 50 mm, dessen Einlaßstutzen 2 um den Abstand A gegenüber der Höhe des parallelachsigen Auslaßstutzens 3 versetzt ist. Das Ventilgehäuse 4, an dem die Stutzen 2 und 3 sitzen, enthält einen nicht dargestellten Ventilteller, der mit einer Ventilspindel 5 betätigt wird. Damit wird er in bekannter Weise von einer Schließstellung, in der der Ventilteller auf dem Ventilsitz nach Art eines Anschlages aufsitzt, in eine Öffnungsstellung gefahren, in der der Ventilteller z.B. einem Absatz des Ventilgehäuses 4 anliegen kann (Rücksitz). Die Ventilbetätigung erfolgt motorisch. Dazu ist auf die sogenannte Laterne 8, durch die das äußere Ende der Ventilspindel 5 hindurchführt, ein doppeltwirkender Drehantrieb 10 aufgesetzt, dessen strichpunktiert dargestellte Achse 11 mit der Ventilspindel 5 zusammenfällt.

Der Drehantrieb 10 umfaßt einen Elektromotor 12, vorzugsweise einen Drehstrommotor, und ein Losreißgetriebe 13. Elektromotor 12, Losreißgetriebe 13 und Ventil 1 sind miteinander verschraubt. Man erkennt, daß der gesamte Drehantrieb 10 kleiner als das Ventil 1 ist. Am freien Ende der Motorwelle ist eine kleine Scheibe 12a zwecks gelegentlicher Handbetätigung aufgesteckt. Der sonst übliche Motorlüfter entfällt, da er während der nur wenige Sekunden dauernden Betriebsdauer des Motors keine spürbare Kühlwirkung entfalten könnte.

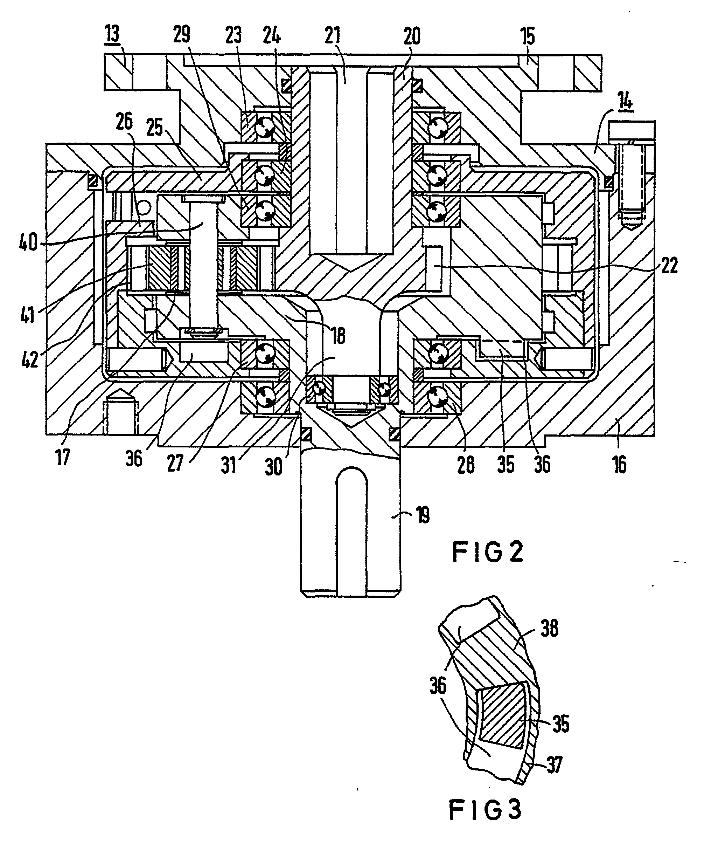

Wie die Figur 2 zeigt, umfaßt das Losreißgetriebe 13 ein Gehäuse 14 mit Durchmesser 160 mm, dessen Oberteil 15 als Flansch zum Aufsetzen des Motors 12 ausgebildet ist. Das Oberteil 15 bildet einen Deckel für ein tassenförmiges Unterteil 16, in dem ein Planetengetriebe 17 angeordnet ist. Ein Planetenträger 18 des Getriebes 17 ragt mit einer zentrischen Abtriebswelle 19 nach unten aus dem Gehäuse 14 heraus. Diese wird mit der Ventilspindel 5 gekuppelt.

Im Oberteil 15 sitzt eine Hohlwelle 20 mit einer Keilnutverzahnung 21, in die die nicht weiter dargestellte Welle des Elektromotors 12 eingreifen kann. Die Hohlwelle 20 ist somit die Antriebswelle des Planetengetriebes 17 und bildet zugleich dessen Sonnenrad 22. Sie ist mit einem Kugellager 23 im Oberteil 15 gelagert und trägt mit einem weiteren Kugellager 24 über eine Zwischenscheibe 25 den Hohlkranz 26 des Planetengetriebes 17, der über ein Kugellager 27 auch an der Abtriebswelle 19 abgestützt ist, und zwar unmittelbar neben deren Lager 28 im Unterteil 16.

Unter dem Kugellager 24 sitzt ein Kugellager 29. Es bildet das obere Lager des Planetenträgers 18, in dem mit einem weiteren Kugellager 30 ein Endzapfen 31 der Hohlwelle 20 gelagert ist. Der Planetenträger 18 ragt mit einem Mitnehmerzahn 35 nach unten in eine Ringnut 36 in der Bodenscheibe 37 des Hohlkranzes 26, in der ein Gegenzahn 38 an einer Stelle des Umfangs vorgesehen ist, wie Fig. 3 zeigt.

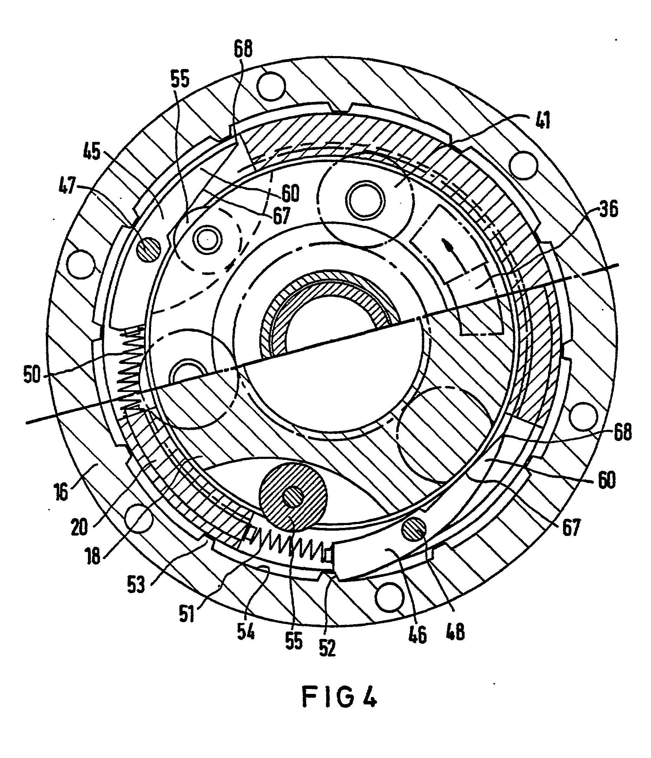

Im Planetenträger 18 sind mit Stiften 40 drei symmetrisch um das Sonnenrad 22 verteilte Planetenräder 41 angeordnet, die mit der Verzahnung 42 des Hohlkranzes 26 kämmen. Die Planetenräder 41 haben, wie die Fig. 4 zeigt, etwa den halben Durchmesser des Sonnenrades 22. Der Durchmesser beträgt z.B. 30 mm.

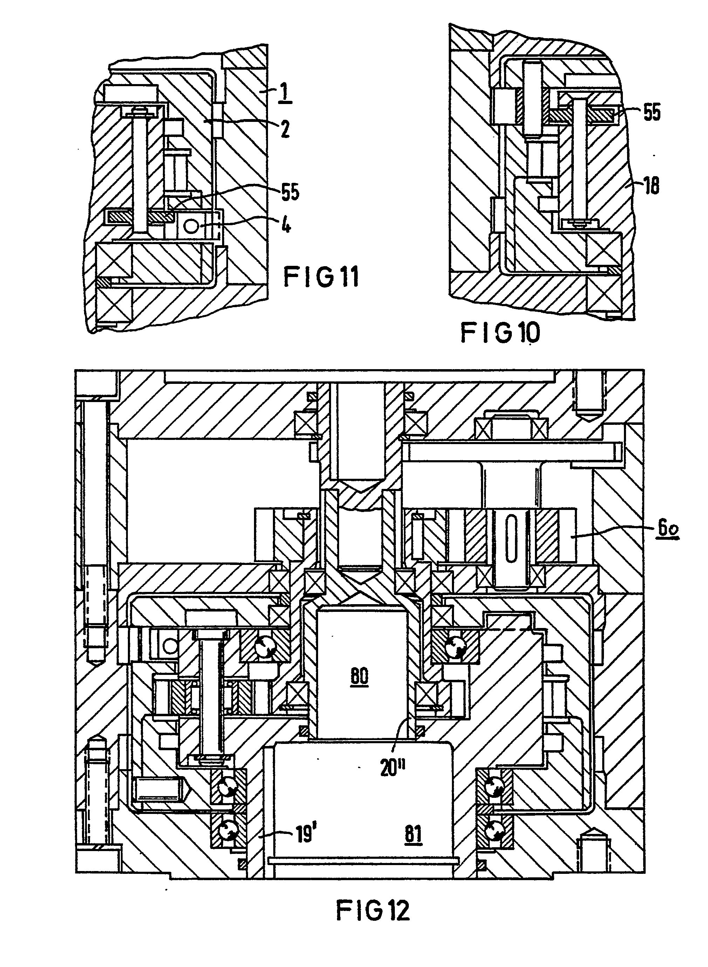

Im Hohlkranz 26 sind als Rücklaufsperren ferner zwei symmetrisch zueinander angeordnete Sperrklinken 45 und 46 vorgesehen, die mit Achsen 47 und 48 in einer Ebene rechtwinklig zur Drehachse, d.h. parallel zur Ebene des Planetengetriebes 17 schwenkbar angeordnet sind. Die Sperrklinken sind mit Federn 50 und 51 an dem Hohlkranz 26 abgestützt. In der Sperrlage greift die eine, je nach der Drehrichtung wirksame Sperrklinke, beim Ausführungsbeispiel nach Fig. 4 ist dies die Sperrklinke 46, mit ihrer Sperrfläche 52 gegen einen von Vorsprüngen 53, die an der Innenseite des Gehäuseunterteils 16 in gleichem Abstand voneinander vorgesehen sind, so daß Nuten 54 zwischen den Vorsprüngen 53 entstehen. Die Sperrklinken wirken zum Entklinken mit zwei im Planetenträger 18 gelagerten Vorsprüngen 55, die als Rollen ausgebildet sind, zusammen, die in Richtung der Drehachse versetzt sind, wie die Figuren 10 und 11 erkennen lassen. Dabei ist die Anordnung der Sperrklinken 45 und 46 und der Rolle 55 so getroffen, daß folgende Wirkung erreicht wird:

Die beiden, symmetrisch zueinander angeordneten Sperrklinken sperren in ihrer Eingriffsstellung die Drehung des Hohlkranzes 26 gegenüber dem Gehäuse 14 praktisch vollständig, d.h. nur mit einem kleinen, für das freie Lösen der Klinken notwendigem Spiel. Zum Lösen der Sperrklinken laufen die Rollen 55 auf einen Fortsatz 60 der Klinken auf, dessen Anlagefläche 67 in der Stellung, in der die Sperrklinke außer Eingriff mit dem Gehäuse 14 ist, zum großen Teil annähernd einem Kreisbogen entspricht, der um die Achse 11 des Drehantriebes geschlagen wird. Damit soll erreicht werden, daß die von den Federn 50, 51 ausgeübte Kraft keine Rückstellbewegung erzeugen kann, mit der die Rollen 55 von den Sperrklinken 45, 46 beiseite gedrückt werden. Beim Ausführungsbeispiel ist die Anlagefläche 67 in Form einer Geraden vereinfacht ausgeführt, die etwa als Tangente an den Kreisbogen zu sehen ist. In der Sperrstellung soll dagegen die Spitze 68 der Sperrklinken etwa auf diesem Kreisbogen liegen, damit die Schwenkbewegung der Sperrklinken durch die Rollen 55 nicht abrupt, sondern über einen größeren Drehweg vorgenommen wird.

Mit dem vorstehend beschriebenen neuen Drehantrieb wird vom Motor 12 das Sonnenrad 22 des Planetengetriebes in der einen oder anderen Drehrichtung betätigt, je nach dem, ob das Ventil 1 geöffnet oder geschlossen werden soll. Dabei dreht sich der Mitnehmerzahn 35 in der Ringnut 36, wenn die Abtriebswelle 19 festgehalten wird, weil das Ventil in der Endstellung einen großen Widerstand ausübt. Dabei wird durch das Planetengetriebe 17 eine Drehmomentvergrößerung im Verhältnis von etwa 1 : 3 ausgeübt, weil die Planetenräder 41 auf dem Hohlkranz 26 abrollen, solange dieser gegenüber dem Gehäuse 14 durch die eine der beiden Sperrklinken 45 oder 46 festgelegt ist. Mit diesem großen Drehmoment wird die Haltekraft in der Endlage des Ventils 1 mit Sicherheit überwunden. Das Planetengetriebe arbeitet dabei also als "Losreißgetriebe".

Nach der einen Umdrehung des Planetenträgers 18 wird die in der Eingriffsstellung mit dem Gehäuse 14 verweilende Klinke, beim Ausführungsbeispiel ist dies die Sperrklinke 46, von der zugehörigen Rolle 55 entriegelt. Deshalb kann über den Mitnehmerzahn 35 der Hohlkranz 26 mitgenommen werden. Dies bedeutet, daß das Sonnenrad 22 und die Planetenräder 41 ebenso wie der Hohlkranz 26 mit gleicher Drehgeschwindigkeit bewegt werden. Diese Geschwindigkeit wirkt als Schnellgang. Sie beträgt das Dreifache der Geschwindigkeit beim Arbeiten des Losreißgetriebes.

Mit dem Schnellgang wird das Ventil in die andere Endstellung gefahren. Damit wird die Abtriebswelle 19 festgehalten. Der Motor 12 wird abgebremst und festgehalten. Er wird ausgeschaltet.

Zur Bewegung in Gegenrichtung wird der Motor 12 umgesteuert. Aufgrund der geänderten Drehrichtung wird nunmehr wiederum zunächst die in Eingriff befindliche Sperrklinke gelöst. Das Planetengetriebe 17 arbeitet als Losreißgetriebe und sorgt damit für eine verringerte Drehzahl und ein vergrößertes Drehmoment so lange, bis der Mitnehmerzahn 35 nach etwa einer Umdrehung des Planetenträgers 18 an die andere Seite des Gegenzahns 38 anläuft. Dann wird wieder unter Ausschaltung des Planetengetriebes 17 der Schnellgang bis zum Erreichen der anderen Endstellung gefahren.

Beim Ausführungsbeispiel nach Figur 5 wird das Losreißgetriebe 17 über ein Vorgelege 60' betätigt. Das zweistufige Vorgelege 60' umfaßt eine Eingangswelle 61 mit einer Verzahnung 62. Mit dieser kämmt ein Großrad, 63 das mit einem Ritzel 64 gleichachsig verbunden ist. Mit dem Ritzel 64 kämmt eine Verzahnung 65 auf der Antriebswelle 20' des Planetengetriebes 17. Diese Anordnung eignet sich gut für einen schnellaufenden, z.B. 4-poligen Drehstrommotor. Das maximale Losreißmoment des Drehantriebs 13 kann bei 150 Nm liegen, während der entgegengesetzte Endanschlag im Schnellgang mit z.B. 50 Nm angefahren wird.

Beim Ausführungsbeispiel nach Figur 5 ist der Mitnehmerzahn 35' des Planetenträgers 18 an dessen Oberseite angeordnet. Die Ringnut 36' befindet sich hier in dem Scheibenkörper 25, der entsprechend dicker gearbeitet ist.

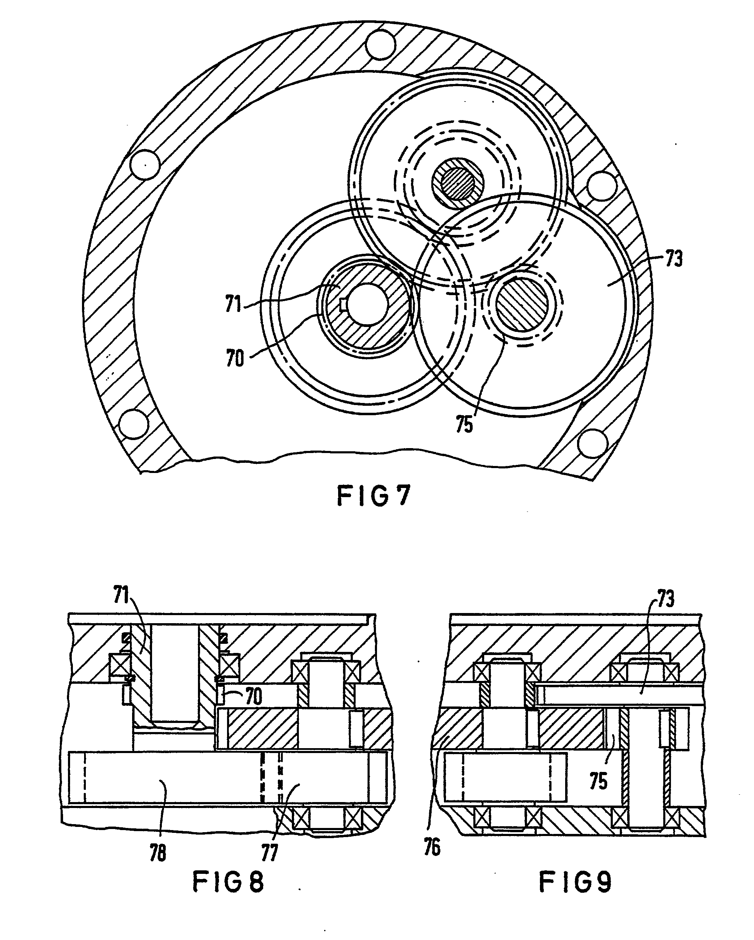

In den Figuren 7, 8 und 9 ist dargestellt, daß das Vorgelege auch dreistufig ausgeführt werden kann. Es umfaßt dann ein Ritzel 70 auf der Eingangswelle 71 mit z.B. 21 Zähnen. Das Ritzel 70 kämmt mit einem ersten Zahnrad 73 mit 48 Zähnen, das mit einem weiteren Ritzel 75 mit 10 Zähnen verbunden ist. Mit dem Ritzel 75 kämmt ein Zwischenrad 76 mit 29 Zähnen. Das mit diesem gekoppelte dritte Ritzel 77 mit 12 Zähnen greift dann in die Verzahnung 78 der Antriebswelle des Planetengetriebes 17, die hier 22 Zähne aufweist. Insgesamt hat das kleinbauende Getriebe ein Übersetzungsverhältnis von 1 : 12,15.

Das Losreißgetriebe nach Figur 12 besitzt wiederum ein zweistufiges Vorgelege 60 mit den Übersetzungsverhältnissen i = 36 und i = 12. Die Antriebswelle 20" und die Abtriebswelle 19' sind hierbei jedoch beide hohl ausgeführt. Die Hohlräume 80 und 81 schaffen Platz für eine nach oben wandernde Betätigungsspindel, so daß eine besonders gedrängte Bauweise insgesamt möglich ist.

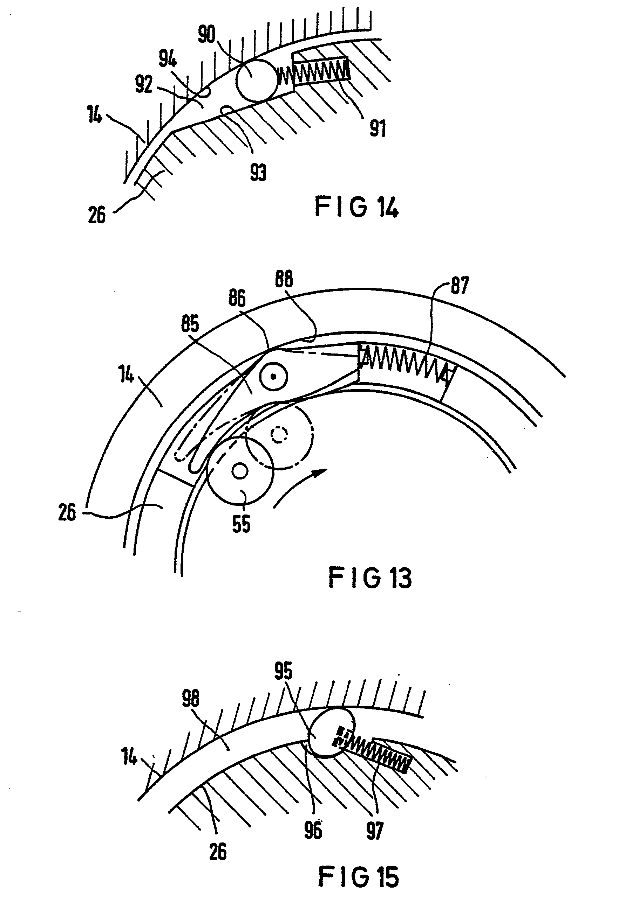

Beim Ausführungsbeispiel nach Figur 13 ist dargestellt, daß die Sperrklinken 45 und 46 durch einen Kniehebel 85 ersetzt sind. Dieser greift mit seinem Sperrnocken 86 unter der Wirkung der Feder 87 so gegen die zylindrische Innenwand 88 des Gehäuses 14, daß durch Selbstverstärkung der Reibschluß zu einer vollständigen Festlegung führt. Damit ist eine bei der Umfangsbewegung stufenlose Festlegung zwischen dem Hohlkranz 26 und dem Gehäuse 14 möglich. Zum Lösen wird der Kniehebel von der Rolle 55 weggedrückt, die im Planetenträger 18 gelagert ist.

In Figur 14 ist dargestellt, daß der Kraftschluß zwischen dem Gehäuse 14 und dem Hohlkranz 26 auch durch Rotationskörper 90, insbesondere durch zylindrische Rollen, erreicht werden kann, die unter der Wirkung einer Feder 91 in einem keilförmigen Spalt 92 zwischen einer geradlinigen Druckfläche 93 und der zylindrischen Innenseite 94 des Gehäuses 14 gedrückt werden. Bei dieser Ausführungsform kann man auf besondere Schwenkachsen verzichten. Es ergibt sich somit eine sehr einfache Ausführungsform.

Die Figur 15 zeigt eine Ausführung der Sperrklinken in Form eines Rollkörpers 95, mit dem aus der Figur ersichtlichen ovalen Querschnitt. Der Rollkörper liegt in einer gerundeten Mulde 96 am Außenumfang des Hohlkranzes 26. Er wird mit einer Feder 97, die zugleich die notwendige Fixierung ergeben kann, gegen den Spalt 98 zwischen der Außenseite des Hohlkranzes 26 und der Innenseite des Gehäuses 14 gedrückt.

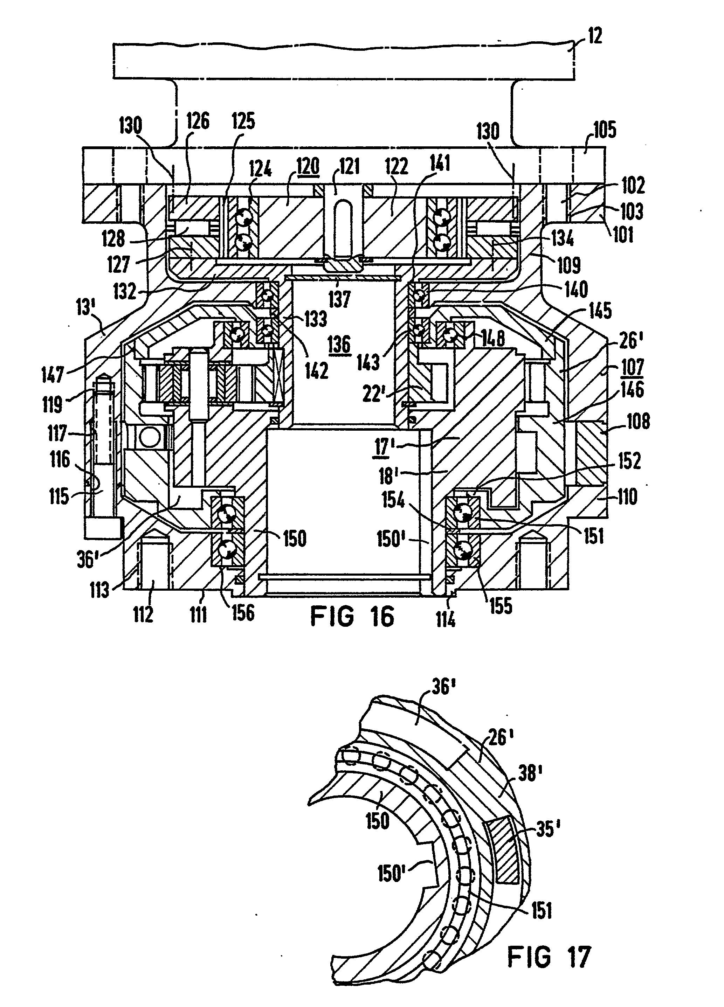

Das in FIG 16 dargestellte Losreißgetriebe 13' ist mit dem strichpunktiert angedeuteten Motor 12 über einen Flansch 101 verbunden, der Schraubenlöcher 102 mit einem Gewinde 103 (z.B. Gewinde M6 oder M8) aufweist. Dort ist der Flansch 101 mit dem Motorflansch 105 verbunden.

Der Flansch 101 ist Teil eines mehrteiligen Gehäuses 107. Zu diesem Gehäuse zählt ein Ring 108, der aus Stahl besteht, während der darüberliegende Teil 109 ebenso wie der darunterliegende Teil 110 aus Leichtmetall, z.B. Aluminiumguß, hergestellt ist. Der Teil 110 besitzt eine Anschlußfläche 111 mit Sackbohrungen 112, die ein Gewinde 113 aufweisen. Das Gewinde kann wiederum M6, M8 od. dgl. sein und einem genormten Anschluß von Stellantrieben an Armaturen (z.B. gemäß DIN 3210) entsprechen. Aus der Anschlußfläche 111 springt ein Absatz 114 zur Zentrierung eines Stellorgans vor. Die Teile 108 bis 110 des Gehäuses 107 sind durch Schrauben 115 verbunden, die durch Bohrungen 116 und 117 der Gehäuseteile 108 und 110 greifen und in Gewindebohrungen 119 im Gehäuseteil 109 eingeschraubt sind.

Das Gehäuse 107 enthält im Bereich des Flansches 101 ein Zweischeiben-Gleitkeilgetriebe 120, das die Motorwelle 121 umschließt. Auf der Motorwelle 121 ist ein ovales Rad 122 mit einem Keil verdrehungssicher befestigt, auf dem ein deformierbares Kugellager 124 mit ebenfalls ovaler Form sitzt. Das Kugellager 124 trägt einen bandförmigen Zahnring 125 mit z.B. 41 Zähnen. Dieser Zahnring 125 kämmt insgesamt mit Zähnen einer oberen Scheibe 126 und einer unteren Scheibe 127, die über Walzen 128 aufeinandergleiten. Die mit dem Zahnring 125 kämmenden Scheiben 126 und 127 haben unterschiedliche Zähnezahlen. Beim Ausführungsbeispiel betragen die Zähnezahlen z.B. 40 zu 42 Zähne. Daraus resultiert im Zusammenwirken mit dem nur örtlichen Eingreifen im Zahnring 125 (an zwei gegenüberliegenden Stellen des Umfanges) ein Übersetzungsverhältnis von 1:20. Anders ausgedrückt, ergibt sich bei einer Drehzahl von 2800 Umdrehung pro Minute der Motorwelle 121 eine Drehzahl von 140 der Hohlwelle 133.

Die Scheibe 126 ist über Stifte oder Schrauben 130 mit dem Motorflansch 105 drehfixiert verbunden. An der Scheibe 127 ist der Flanschkörper 132 einer hohlen Abtriebswelle 133 mit Stiften 134 befestigt. Das Innere 136 der Hohlwelle 133 ist gegenüber der Motorwelle 121 durch eine Blechscheibe 137 abgeschlossen, die in Vertiefungen der Hohlwelle 133 eingepreßt ist. Dabei ist der Abstand zwischen der Blechscheibe 137 und der ihr zugekehrten Stirnseite der Motorwelle 121 so klein wie möglich gemacht. Beim Ausführungsbeispiel beträgt er 1,5 mm.

Die Hohlwelle 133 ist im Gehäuse 107 mit einem Kugellager 140 radial geführt, dessen Innenring mit der Anlage an einer Schulter 141 des Flanschkörpers 132 auch eine axiale Kraft weiterleiten kann. Unterhalb des Kugellagers 140, sitzt, durch einen Distanzring 142 getrennt, ein zweites Kugellager 143 auf der Hohlwelle 133. An dieses grenzt das Sonnenrad 22' eines Planetengetriebes 17', das wie bei den vorhergehenden Ausführungsbeispielen eine Drehmomentverstärkung für den "Anfahrbereich" aufbringt.

Am Außenring des Kugellagers 143 ist der Hohlkranz 26' des Planetengetriebes 17' abgestützt. Der Hohlkranz besteht aus dem Oberteil 145 und dem Unterteil 146. Die beiden Teile greifen bei 147 in axialer Richtung ineinander. In der Innenseite des Oberteils 145 sitzt ein Kugellager 148, das die motornahe Abstützung für den Planetenträger 18' bildet. Das Kugellager 143 kann eine axiale Luft auf seinen Außenring überleiten und sie über einen Bund auf das Oberteil 145 abgeben, das eine axiale Luft auch über das Kugellager 148 weitergeben kann. Das dem Motor abgekehrte Ende des Planetenträgers 18' führt als Hohlwelle 150 mit einer Keilnut 150' zur Unterseite des Gehäuses 107.

Auf der Hohlwelle ist mit einem Kugellager 151 die Unterseite des Hohlkranzes 26' gelagert, und zwar wiederum sowohl in radialer Richtung als auch, mit Hilfe des Vorsprunges 152, in axialer Richtung. Neben dem Kugellager 151 sitzt, mit einem Zwischenring 154 distanziert, ein weiteres Kugellager 155 auf der Hohlwelle 150. Der Außenring des Kugellagers 155 ist an einer Schulter 156 auch in axialer Richtung festgelegt. Das axiale Einbauspiel wird durch passende Dickenauswahl des Zwischenrings 154 eingestellt.

Die FIG 17 zeigt, daß in dem Hohlkranz 26' wiederum eine Ringnut 36' vorgesehen ist, in diese greift als Mitnehmer der Zahn 35' des Planetenträgers 18', der mit dem Anschlag 38' zusammenwirkt.

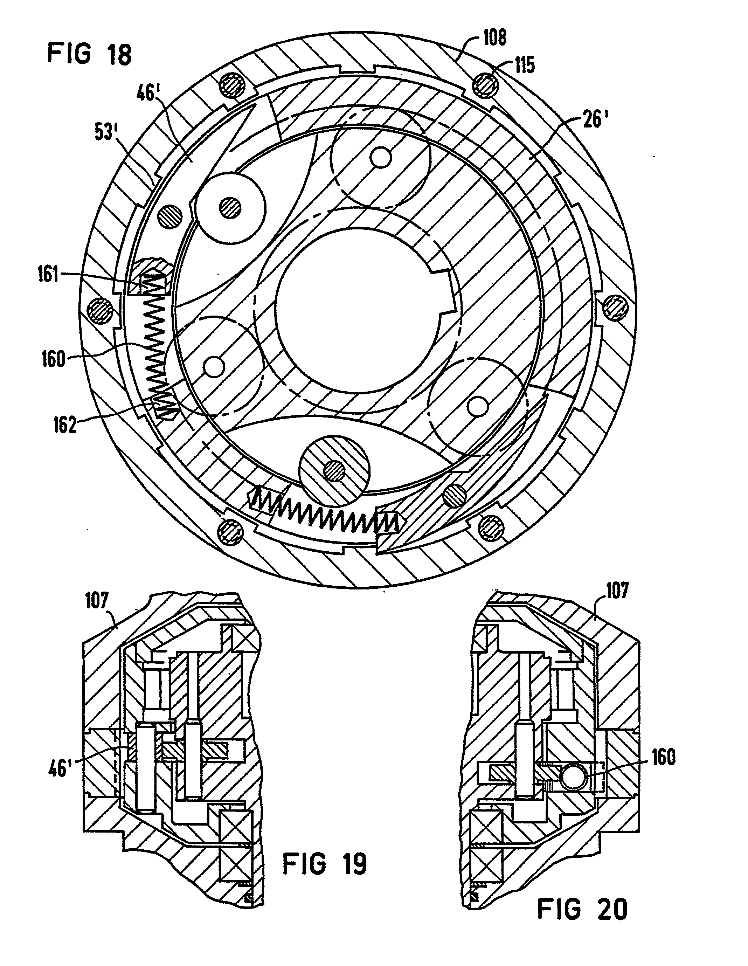

Die FIG 18 zeigt in einem Schnitt rechtwinklig zur Drehachse die Anordnung und Betätigung der Klinken 46', wie sie bereits anhand der FIG 4 vorstehend erläutert wurden. Allerdings werden hierbei die Klinken 46' mit Hilfe von Schraubenfedern 160 vorgespannt, die den Bohrungen 161 der Klinken 46' und 162 des Hohlkranzes 26' greifen. Die Schraubenfedern 160 wirken in dieser Anordnung als Biegefeder mit einer kleinen Federkonstante, so daß bei der erwünschten Auslenkung keine großen Kräfte entstehen. Die Klinken 46' wirken hierbei mit den Vorsprüngen 53' zusammen, die in dem aus Stahl bestehenden Ring 108 vorgesehen sind. Die axiale Anordnung der Klinken 46' und ihre Zuordnung zu dem Gehäuse 107 ist in den Figuren 19 und 20 zu sehen.

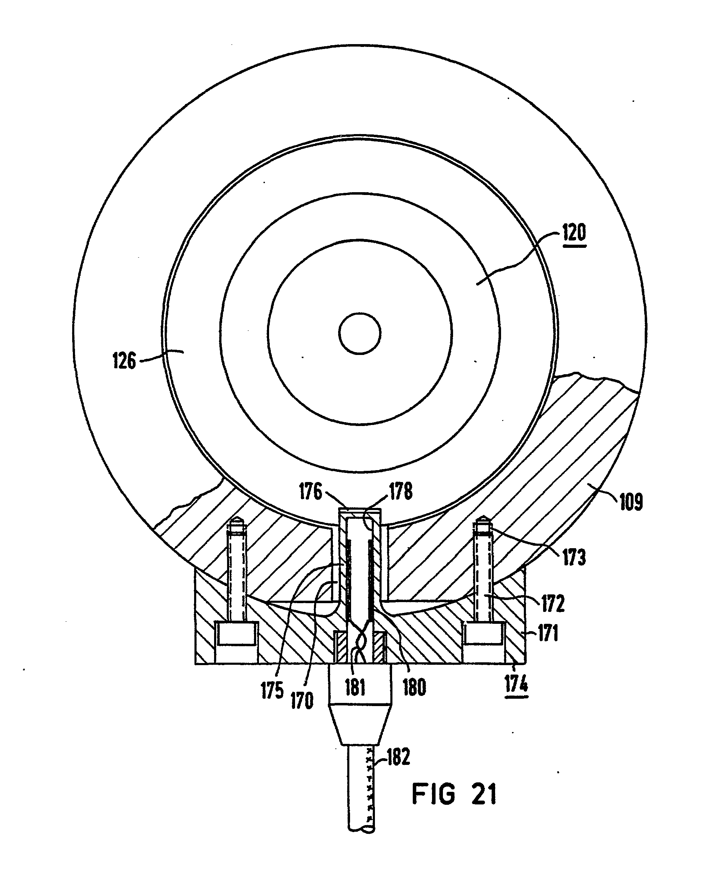

Die FIG 21 zeigt, daß in dem Gehäuseteil 109 eine radiale Bohrung 170 vorgesehen sein kann, die nach außen durch einen Deckel 171 verschlossen wird, der mit Schrauben 172 in Gewindelöchern 173 befestigt wird. Der Deckel 171 ist Teil einer Kraftmeßeinrichtung 174, die aufgrund ihres Abstandes zur Drehachse Drehmomente des Getriebes 120 mißt. Sie umfaßt einen durch die Bohrung 170 ragenden Hohldorn 175, der als Meßwertaufnehmer mit seiner Spitze in eine Nut 176 der Scheibe 126 des Gleitkeilgetriebes 120 greift, die dann nicht weiter gegen Verdrehungen festgelegt ist. An der Innenseite 178 des Hohldorns 175 sind Dehnungsmeßstreifen 180 befestigt, deren Anschlußdrähte 181 zu einem Kabel 182 führen. Mit den Dehnungsmeßstreifen 180 kann das Drehmoment erfaßt werden, das mit dem Gleitkeilgetriebe 120 auf die Hohlwelle 133 aufgebracht wird, wenn der Stellantrieb arbeitet. Damit kann das Arbeiten des Stellantriebes überwacht werden. Zum Beispiel können damit auch Steuerungen verwirklicht werden, die dafür sorgen, daß der Antriebsmotor 12 abgesteuert wird, noch bevor eine voreingestellte zeitabhängige Abschaltung wirksam wird. Dies verringert die stillstandsbedingte Einschaltzeit des Motors nach Erreichen der mechanischen Hubbegrenzung und kann so bei häufiger Betätigung des Drehantriebs eine möglicherweise störende Erwärmung des Motors reduzieren.

## Patentansprüche

1. Doppeltwirkender Drehantrieb für ein Stellorgan mit einer in Form eines Anschlags festgelegten Endstellung, mit einem Motor (12) und einem drehmomentverändernden Getriebe (17), wobei dem Getriebe (17) ein Mitnehmer (35, 38) zugeordnet ist, der nach einem Teil des gesamten Drehwegs eine drehmomenterhöhende Wirkung des Getriebes (17) aufhebt oder eine drehmomenterniedrigende Wirkung einschaltet, wobei eine Rücklaufsperre (45, 46) vorhanden ist, die entriegelt wird, bevor der Mitnehmer (35, 38) wirksam wird, und wobei das Getriebe ein Planetengetriebe (17) mit einem feststehenden Gehäuse (14), einem darin umlaufenden Hohlkranz (26), mindestens einem Planetenrad (41), einem Planetenträger (18) und einem Sonnenrad (22) ist, dadurch gekennzeichnet, daß auf dem Hohlkranz (26) zwei Sperrglieder (45, 46) angeordnet sind, die dessen Drehung in je eine Richtung annähernd vollständig sperren, und daß auf dem Planetenträger (18) ein oder zwei Vorsprünge (55) sitzen, die nur jeweils eines der beiden Sperrglieder (45, 46) entriegeln.

2. Drehantrieb nach Anspruch 1, gekennzeichnet durch eine symmetrische Ausbildung für beide Drehrichtungen mit einem Anschlag für jede der beiden Endstellungen und einer drehmomentverändernden Wirkung des Mitnehmers (35, 38) beim Verlassen jeder der beiden Endstellungen.

3. Drehantrieb nach Anspruch 1 oder 2, dadurch gekennzeichnet, daß das Planetengetriebe (17) eine Übersetzung von 1:2 bis 1:5 hat.

4. Drehantrieb nach Anspruch 3, dadurch gekennzeichnet, daß der Planetenträger (18) mit der Abtriebswelle (19) und das Sonnenrad (22) mit der Antriebswelle (20) verbunden ist.

5. Drehantrieb nach Anspruch 4, dadurch gekennzeichnet, daß der Mitnehmer (35, 38) den Planetenträger (18) mit dem Hohlkranz (26) koppelt.

6. Drehantrieb nach Anspruch 1, dadurch gekennzeichnet, daß das Sperrglied eine Klinke (45, 46) mit einer Schwenkachse (47, 48) ist und formschlüssig und selbstsperrend in Nuten (54) der Gehäuse-Innenwand eingreift.

7. Drehantrieb nach Anspruch 1, dadurch gekennzeichnet, daß das Sperrglied ein Kniehebel (85) ist oder eine auf einer Schräge laufende Walze (90) und infolge einer großen radialen Kraftüberhöhung eine reibungsbedingte Selbsthemmung in Umfangsrichtung erzeugt.

8. Drehantrieb nach Anspruch 6 oder 7, dadurch gekennzeichnet, daß das Sperrglied (45, 46) mit einer Rückstellfeder (50, 51) versehen ist, deren Wirkung stellungsabhängig durch einen Vorsprung (55) aufgehoben wird.

9. Drehantrieb nach Anspruch 8, dadurch gekennzeichnet, daß die Rückstellfeder eine Biegefeder, vorzugsweise in Form einer Schraubenfeder (160), ist.

10. Drehantrieb nach Anspruch 1, dadurch gekennzeichnet, daß der bzw. die Vorsprünge als Rollen (55) ausgebildet sind.

11. Drehantrieb nach Anspruch 10, dadurch gekennzeichnet, daß die Innenkontur des Fortsatzes (60) der außer Eingriff mit den Gehäusenuten (54) geschwenkten Klinke (45, 46) zum großen Teil annähernd ein Kreisbogen ist, der um die Wellenmitte als Mittelpunkt geschlagen wird, und daß an dem von der Schwenkachse (47, 48) entfernten Ende des Fortsatzes (60) die Innenkontur nach außen in der Weise abbiegt, daß sie am entfernten Ende etwa dann auf den Kreisbogen zu liegen kommt, wenn die Klinke (45, 46) durch die Rückstellfeder (50, 51) in Eingriff gestellt ist.

12. Drehantrieb nach Anspruch 1 oder einem der folgenden in Verbindung mit einem Stellorgan (1), das mindestens in einer Bewegungsrichtung durch ein selbsthemmendes Element (5) (z.B. Gewindespindel) in seiner Endlage festgehalten wird.

13. Drehantrieb nach Anspruch 1 oder einem der folgenden, dadurch gekennzeichnet, daß auf der Abtriebsseite (19') des Drehantriebs (13) ein zentraler Hohlraum (80, 81) vorgesehen ist, der Platz für eine Armaturenspindel bietet. (Fig. 12).

14. Drehantrieb nach Anspruch 4 oder einem der folgenden, dadurch gekennzeichnet, daß zwischen Motor (12) und Sonnenrad (22) ein Vorgelege-Getriebe (60) angeordnet ist (z.B. i = 12).

15. Drehantriebe nach Anspruch 14, dadurch gekennzeichnet, daß das Vorgelege (60) nicht selbsthemmend ist, z.B. ein Stirnradgetriebe oder Planetengetriebe.

16. Drehantrieb nach Anspruch 14, dadurch gekennzeichnet, daß das Vorgelege (60) ein koaxiales Cycloidengetriebe oder ein Gleitkeilgetriebe (120) ist.

17. Drehantrieb nach Anspruch 16, dadurch gekennzeichnet, daß das Vorgelege ein Zweischeiben-Gleitkeilgetriebe (120) ist, das die Motorwelle (121) umschließt, und daß mit der Abtriebsscheibe (127) des Gleitkeilgetriebes (120) eine Hohlwelle (133) verbunden ist, die einen eine Ventilspindel aufnehmenden Hohlraum (136) bildet.

18. Drehantrieb nach Anspruch 17, dadurch gekennzeichnet, daß das motorseitige Ende der Hohlwelle (133) durch einen Blechdeckel (137) abgeschlossen ist, dessen Abstand von der Motorwelle (121) höchstens 10 mm beträgt.

19. Drehantrieb nach Anspruch 17 oder 18, dadurch gekennzeichnet, daß die Drehzahl der Hohlwelle (133) höchstens ein Zehntel der Drehzahl der Motorwelle (121) beträgt.

20. Drehantrieb nach Anspruch 17, 18 oder 19, dadurch gekennzeichnet, daß das Gleitkeilgetriebe (120) ein axial belastbares Gleit- oder Wälzlager (128) zwischen seinen Scheiben (126, 127) besitzt.

21. Drehantrieb nach den Ansprüchen 17 bis 20, dadurch gekennzeichnet, daß das Gleitkeilgetriebe (120) auf ein Planetengetriebe (17') wirkt, dessen Hohlkranz (26') zwischen Kugellagern (140, 143, 151, 155) auf der Abtriebswelle (133) des Gleitkeilgetriebes (120) und auf der als Hohlwelle (150) ausgeführten Abtriebswelle des Planetengetriebes (17') in axialer Richtung festgelegt ist.

22. Drehantrieb nach einem der Ansprüche 17 bis 21, dadurch gekennzeichnet, daß das Gleitkeilgetriebe (120) und das drehmomentverändernde Getriebe (17') in einem gemeinsamen Gehäuse (107) angeordnet sind, daß das Gehäuse (107) überwiegend aus Leichtmetall besteht und daß das Gehäuse (107) im Bereich von Eingriffsstellen der Rücklaufsperre aus Stahl bestehende Einlagen (108) aufweist.

23. Drehantrieb nach Anspruch 22, dadurch gekennzeichnet, daß die Einlagen in Form eines Ringes (108) zwischen zwei axial versetzten Gehäuseschalen (109, 110) angeordnet sind und daß die Gehäuseschalen (109, 110) durch Schrauben (115) verbunden sind, die durch den Ring (108) hindurchgreifen.

24. Drehantrieb nach Anspruch 23, dadurch gekennzeichnet, daß die abtriebsseitige Gehäuseschale (110) Gewinde-Sacklöcher (112) zum Anbau des Stellorgans aufweist.

25. Drehantrieb nach Anspruch 17 oder einem der folgenden, dadurch gekennzeichnet, daß die ortsfeste Scheibe (126) des Zweischeiben-Gleitkeilgetriebes (120) mit einer Kraftmeßeinrichtung (174) für Drehmomente des Getriebes (120) versehen ist

26. Drehantrieb nach Anspruch 25, dadurch gekennzeichnet, daß die Scheibe (126) in Umfangsrichtung federnd in einem Gehäuse (107) festgelegt ist und bei Überschreiten eines vorbestimmten Drehmoments einen Endschalter betätigt.

27. Drehantrieb nach Anspruch 26, dadurch gekennzeichnet, daß die Scheibe (126) in Umfangsrichtung in einem Gehäuse (107) mittels einer Dehnstreifen-Meßeinrichtung (174) festgelegt ist.

28. Drehantrieb nach Anspruch 25 oder 27, dadurch gekennzeichnet, daß die Dehnstreifen-Meßeinrichtung (174) einen Ausschalter für den Motor (12) steuert.

29. Drehantrieb nach Anspruch 1 oder einem der folgenden, gekennzeichnet durch einen Elektromotor (12) mit einem Stromversorgungsteil mit einem Schütz, einem Zeitschalter, einem Bimetallschutz und erforderlichenfalls mit einem Vorwiderstand zur Drehmomentbegrenzung für jede Phase, wobei der Vorwiderrstand für eine thermische Kurzzeitbelastung (z.B. 6 Sekunden) ausgelegt ist und bei kleiner Baugröße gegen einen anderen Widerstand mit abweichendem Ohmwert leicht austauschbar angeordnet ist.

30. Drehantrieb nach Anspruch 29, dadurch gekennzeichnet, daß der Stromversorgungsteil zwei Wendeschütze und zwei Betätigungstasten (Auf, Zu) sowie mindestens ein Meßglied zur Messung des Motorstromes in einer Motorzuleitung aufweist, daß ein zweiter Zeitschalter vorgesehen ist, der eine kürzere Zeiteinstellung als der andere Zeitschalter aufweist, daß der zweite Zeitschalter mit dem Meßglied verbunden ist und daß durch die Verbindung ein Anzeigeglied betätigt wird, wenn zwischen der zweiten und der ersten Zeiteinstellung ein Stromanstieg vorliegt.

31. Drehantrieb nach Anspruch 30, dadurch gekennzeichnet, daß mit der Verbindung eine um eine Sekunde oder weniger verzögerte Abschaltung des Motors gekoppelt ist, die zusätzlich zur Abschaltung durch den ersten Zeitschalter wirksam wird.

32. Drehantrieb nach Anspruch 31, dadurch gekennzeichnet, daß mit dem Anzeigeglied eine Sperrung der Betätigungstasten gekoppelt ist.

33. Drehantrieb nach Anspruch 30, 31 oder 32, dadurch gekennzeichnet, daß die Zeitglieder stellbare Zeiteinstellungen aufweisen.

34. Drehantrieb nach Anspruch 1 oder einem der folgenden, gekennzeichnet, durch einen Handantrieb mit einer anstelle eines Motorlüfters aufgesteckten Scheibe (12a) und ggf. Vierkant/Innenvierkant/Sechskant.

## Claims

1. A double-acting rotary drive for a regulating unit with an end position fixed in the form of a stop, with a motor (12) and a torque-altering gear unit (17), wherein a driver (35, 38) is associated with the gear unit (17), which, after a part of the total rotational path, neutralises a torque-increasing action of the gear unit (17) or switches on a torque-lowering action, wherein a backstop (45, 46) is present, which is unlocked, before the driver (35, 38) is operative and wherein the gear unit is a planetary gear (17) with a fixed housing (14), a hollow ring (26) rotating therein, at least a planet wheel (41), a planet carrier (18) and a sun wheel (22), characterised in that two blocking members (45, 46) are arranged on the hollow ring (26) which block its rotation in each direction approximately completely, and in that seated on the planet carrier (18) there are one or two projections (55) which unlock in each case only one of both blocking members (45, 46).

2. A rotary drive according to claim 1, characterised by a symmetrical construction for both rotational directions with a stop for each of both end positions and a torque-altering action of the driver (35, 38) when leaving each end position.

3. A rotary drive according to claim 1 or 2, characterised in that the planetary gear (17) has a gear ratio of 1 : 2 to 1 : 5.

4. A rotary drive according to claim 3, characterised in that the planet carrier (18) is connected to the output shaft (19) and the sun wheel (22) is connected to the drive shaft (20).

5. A rotary drive according to claim 4, characterised in that the driver (35, 38) couples the planet carrier (18) with the hollow ring (26).

6. A rotary drive according to claim 1, characterised in that the blocking member is a latch (45, 46) with a swivelling axis (47, 48) and engages in a form-locking and self-locking manner in grooves (54) of the housing inner wall.

7. A rotary drive according to claim 1, characterised in that the blocking member is a toggle lever (85) or is generated by a roller (90) running at an incline and frictional self-locking in the peripheral direction as a result of a large radial force increase.

8. A rotary drive according to claim 6 or 7, characterised in that the blocking member (45, 46) is equipped with a restoring spring (50, 51), the action of which is neutralised in a position-dependent manner by a projection (55).

9. A rotary drive according to claim 8, characterised in that the restoring spring is a spiral spring, preferably in the form of a coil spring (160).

10. A rotary drive according to claim 1, characterised in that the projection or projections are constructed as rollers (55).

11. A rotary drive according to claim 10, characterised in that the inner contour of the projection (60) of the latch (45, 46) pivoted out of engagement with the housing grooves (54), is to a large extent approximately a circular arc, which is disposed around the shaft centre as the central point and in that on the end of the projection (60) removed from the pivoting axis (47, 48) the inner contour is bent outwards in such a manner that it comes to lie by the removed end approximately then on the circular arc, when the latch (45, 46) is engaged by the reset spring (50, 51).

12. A rotary drive according to claim 1 or one of the following claims in combination with a regulating unit (1), which is held at least in one direction of movement by a self-locking element (5) (e.g. threaded spindle) in its end position.

13. A rotary drive according to claim 1 or one of the following [claims], characterised in that on the output side (19') of the rotary drive (13) there is provided a central hollow space (80, 81), which offers space for a valve spindle (Figure 12).

14. A rotary drive according to claim 4 or one of the following [claims] characterised in that between the motor (12) and sun wheel (22) there is arranged a layshaft gear (60) (e.g. i = 12).

15. A rotary drive according to claim 14, characterised in that the layshaft (60) is not selflocking, e.g. a spur gear unit or planetary gear.

16. A rotary drive according to claim 14, characterised in that the layshaft (60) is a coaxial cycloid gear unit or a sliding wedge gear (120).

17. A rotary drive according to claim 16, characterised in that the layshaft is a two-disc sliding wedge gear (120), which surrounds the motor shaft (121) and in that a hollow shaft (133) is connected to the output disc (127) of the sliding wedge gear (2) which forms a hollow cavity (136) accommodating a valve spindle.

18. A rotary drive according to claim 17, characterised in that the motor-side end of the hollow shaft (133) is sealed by a metal cover (137), the distance of which from the motor shaft (121) is at most 10 mm.

19. A rotary drive according to claim 17 or 18, characterised in that the rotational speed of the hollow shaft (133) is at most a tenth of the rotational speed of the motor shaft (121).

20. A rotary drive according to claim 17, 18 or 19, characterised in that the sliding wedge gear (120) possesses an axial loadable sliding or roller bearing (128) between its discs (126, 127).

21. A rotary drive according to claims 17 to 20, characterised in that the sliding wedge drive (120) acts on a planetary gear (17'), the hollow ring (26') of which is fixed in an axial direction between ball bearings (140, 143, 151, 155) on the output shaft (133) of the sliding wedge gear (120) and on the output shaft of the planetary gear (17'), as a hollow shaft (15).

22. A rotary drive according to one of claims 17 to 21, characterised in that the sliding wedge gear (120) and the torque-altering gear unit (17') are arranged in a common housing (107) and in that the housing (107) consists mainly of light weight metal and in that the housing (107) has in the region of the engagement points of the backstops linings (108) consisting of steel.

23. A rotary drive according to claim 22, characterised in that the linings are arranged in the form of a ring (108) between two axially displaced housing shells (109, 110) and in that the housing shells (109, 110) are connected by screws (115), which project through the ring (108).

24. A rotary drive according to claim 23, characterised in that the output side housing shell (110) has threaded blind bores (112) for attaching the regulating unit.

25. A rotary drive according to claim 17 or one of the following [claims], characterised in that the stationary disc (126) of the two-disc sliding wedge gear (120) is provided with a force measuring device (174) for measuring the torque of the gear unit (120).

26. A rotary drive according to claim 25, characterised in that the disc (126) is fixed in the peripheral direction in a flexible manner in a housing (107) and activates a limit switch when a predetermined torque is exceeded.

27. A rotary drive according to claim 26, characterised in that the disc (126) is fixed in a housing (107) in the peripheral direction by means of wire strain gauge-measuring device (174).

28. A rotary drive according to claim 25 or 27, characterised in that the wire strain gauge measuring device (174) controls a disconnecting switch for the motor (12).

29. A rotary drive according to claim 1 or one of the following [claims], characterised by an electromotor (12) with a current supply part with a contactor, a time switch, a bi-metal protection and if required with a series resistor for the torque delimitation for each phase, wherein the series resistor is designed for a thermal short-term load (e.g. 6 seconds) and with small dimensions is arranged so that it is easily exchanged with another resistor with a different ohm value.

30. A rotary drive according to claim 29, characterised in that the current supply part has two contactor type reversers and two control keys (on, off) as well as at least one discriminating element for measuring the motor current in a motor supply, in that a second time switch is provided which has a shorter time adjustment than the other time switch and in that the second time switch is connected to the discriminating element and in that through the connection an indicator element is activated, if a current rise is present between the second and the first time setting.

31. A rotary drive according to claim 30, characterised in that a disconnection delayed by a second or less of the motor is coupled with the connection, which disconnection becomes operative in addition to the disconnection through the first time switch.

32. A rotary drive according to claim 31, characterised in that a blocking of the control keys is coupled with the indicator element.

33. A rotary drive according to claim 30, 31 or 32, characterised in that the timing elements have adjustable time settings.

34. A rotary drive according to claim 1 or one of the following claims , characterised by a hand drive with a disc (12a) inserted instead of a motor ventilator and possibly square/recessed square/hexagonal.

## Revendications

1. Dispositif d'entraînement en rotation à double effet pour un organe de réglage comportant une position d'extrémité déterminée sous la forme d'une butée, un moteur (12) et une transmission (17) modifiant le couple, et dans lequel à la transmission (17) est associé un dispositif d'entraînement (35, 38), qui, une fois franchie une partie ou la totalité de la course de rotation, interrompt une action de la transmission (17) qui augmente le couple, ou déclenche une action qui réduit le couple, et dans lequel est présent un dispositif de blocage antiretour (45, 46), qui est déverrouillé avant que l'organe d'entraînement (35, 38) devienne actif, et dans lequel la transmission est un engrenage planétaire (17) comportant un carter fixe (14), une couronne creuse (26) située sur le pourtour intérieur du carter, au moins un pignon satellite (41), un porte-satellites (18) et une roue planétaire (22), caractérisé par le fait que sur la couronne creuse (26) sont disposés deux organes de blocage (45, 46), qui bloquent presque complètement la rotation de la couronne dans un sens et que sur le porte-satellites (18) sont disposées une ou deux parties saillantes (55), qui déverrouillent seul l'un de deux organes de blocage (45, 46).

2. Dispositif d'entraînement en rotation suivant la revendication 1, caractérisé par une configuration symétrique pour les deux sens de rotation, avec une butée pour chacune des deux positions d'extrémité et un effet, modifiant le couple, de l'organe d'entraînement (35, 38) lorsqu'il quitte chacune des deux positions d'extrémité.

3. Dispositif d'entraînement en rotation suivant la revendication 1 ou 2, caractérisé par le fait que l'engrenage planétaire (17) possède un rapport de démultiplication compris entre 1:2 et 1:5.

4. Dispositif d'entraînement en rotation suivant la revendication 3, caractérisé par le fait que le porte-satellites (18) est relié à l'arbre mené (19) et que la roue planétaire (22) est reliée à l'arbre d'entraînement (20).

5. Dispositif d'entraînement en rotation suivant la revendication 4, caractérisé par le fait que l'organe d'entraînement (35, 38) accouple le porte-satellites (18) à la couronne dentée (26).

6. Dispositif d'entraînement suivant la revendication 1, caractérisé par le fait que l'organe de blocage est un cliquet (45, 46) possédant un axe de pivotement (47, 48) et s'engage, selon une liaison par formes complémentaires et d'une manière auto-bloquante, dans des gorges (54) ménagée dans la paroi intérieure du carter.

7. Dispositif d'entraînement en rotation suivant la revendication 1, caractérisé par le fait que l'organe de blocage est un levier coudé (85) ou un cylindre (90) grimpant sur une rampe et produit, en raison d'un accroissement excessif radial important de la force, un auto-blocage obtenu par frottement dans la direction circonférentielle.

8. Dispositif d'entraînement en rotation suivant la revendication 7, caractérisé par le fait que l'organe de blocage (45, 46) comporte un ressort de rappel (51), dont l'action est supprimée, en fonction de la position, par une partie saillante (55).

9. Dispositif d'entraînement en rotation suivant la revendication 8, caractérisé par le fait que le ressort de rappel est un ressort de flexion, possédant de préférence la forme d'un ressort hélicoïdal (160).

10. Dispositif d'entraînement en rotation suivant la revendication 1, caractérisé par le fait que la ou les parties saillantes sont réalisées sous la forme de rouleaux (55).

11. Dispositif d'entraînement en rotation suivant la revendication 10, caractérisé par le fait que le contour intérieur du prolongement (60) du cliquet (45, 46) dégagé des gorges (54) du carter par pivotement, est constitué en majeure partie approximativement par un arc de cercle, qui est centré sur le centre de l'arbre et qu'à proximité de l'extrémité du prolongement (60), éloignée de l'axe de pivotement (47, 48), le contour intérieur est recourbé vers l'extérieur de telle sorte qu'il vient se situer approximativement sur l'arc de cercle, sur l'extrémité éloignée, lorsque le cliquet (45, 46) est amené en prise par le ressort de rappel (50, 51).

12. Dispositif d'entraînement suivant la revendication 1 ou l'une des suivantes en liaison avec un organe de réglage (1) qui, au moins dans une direction de déplacement, est retenu bloqué dans sa position d'extrémité par un élément auto-bloquant (5) (par exemple une broche filetée).

13. Dispositif d'entraînement en rotation suivant la revendication 1 ou l'une des suivantes, caractérisé par le fait que sur le côté mené (19') du dispositif d'entraînement en rotation (13), il est prévu une cavité centrale (80, 81), qui fournit de la place pour une broche d'un élément de robinetterie (figure 12).

14. Dispositif d'entraînement en rotation suivant la revendication 4 ou l'une des suivantes, caractérisé par le fait qu'une transmission intermédiaire (60) est disposée entre le moteur (12) et la roue planétaire (22) (par exemple i = 12).

15. Dispositif d'entraînement en rotation suivant la revendication 14, caractérisé par le fait que la transmission intermédiaire (60) n'est pas auto-bloquante, et est par exemple une transmission à pignons droits ou un engrenage planétaire.

16. Dispositif d'entraînement en rotation suivant la revendication 14, caractérisé par le fait que la transmission intermédiaire (60) est une transmission hélicoïdale coaxiale ou une transmission à coins glissants (120).

17. Dispositif d'entraînement en rotation suivant la revendication 16, caractérisé par le fait que la transmission intermédiaire est une transmission à coins glissants à deux disques (120), qui entoure l'arbre (121) du moteur, et que le disque (127) de la transmission à coins glissants (120) est relié à un arbre creux (133), qui forme une cavité (136) logeant une broche de vanne.

18. Dispositif d'entraînement en rotation suivant la revendication 17, caractérisé par le fait que l'extrémité, située du côté moteur, de l'arbre creux (133) est fermée par un couvercle en tôle (135), dont la distance par rapport à l'arbre (121) du moteur est égale au maximum à 10 mm.

19. Dispositif d'entraînement en rotation suivant la revendication 7 ou 8, caractérisé par le fait que la vitesse de rotation de l'arbre creux (133) est égale au maximum à un deuxième de la vitesse de rotation de l'arbre (121) du moteur.

20. Dispositif d'entraînement en rotation suivant la revendication 17, 18 ou 19, caractérisé par le fait que la transmission à coins glissants (120) possède un palier lisse ou un palier cylindrique (128) pouvant être chargé axialement, disposé entre ces deux disques (126, 124).

21. Dispositif d'entraînement en rotation selon les revendications 17 à 20, caractérisé en ce que la transmission à coins glissants (120) agit sur un engrenage planétaire (17′), dont la couronne dentée (26′) est fixée entre des roulements à billes (140, 143, 151, 155) sur l'arbre mené (133) de la transmission à coins glissants (120) et est fixée, dans la direction axiale, sur l'arbre mené, réalisé sous la forme d'un arbre creux (150), de l'engrenage planétaire (17′).

22. Dispositif d'entraînement en rotation suivant l'une des revendications 17 à 21, caractérisé par le fait que la transmission à coins glissants (120) et la transmission (17′), qui modifie le couple, sont disposées dans un carter commun (107), que le carter (107) est réalisé dans une large mesure en un métal léger et possède, au niveau des points d'attaque du dispositif de blocage antiretour, des inserts en acier (108).

23. Dispositif d'entraînement suivant la revendication 22, caractérisé par le fait que les inserts sont disposés, sous la forme d'un anneau (108), entre deux coques (109, 110) de carter, décalées axialement, et que les coques (109, 110) de carter sont reliées entre elles par des vis (115), qui traversent l'anneau (108).

24. Dispositif d'entraînement en rotation selon la revendication 23, caractérisé en ce que la coque (110) de carter, située sur le côté mené, comporte des trous borgnes taraudés (112) permettant le montage de l'organe de réglage.

25. Dispositif d'entraînement en rotation suivant la revendication 17 ou l'une des suivantes, caractérisé en ce que le disque fixe (126) de la transmission à coins glissants à deux disques (120) comporte un dispositif dynamométrique (164) servant à mesurer le couple de la transmission (120).

26. Dispositif d'entraînement en rotation suivant la revendication 25, caractérisé par le fait que le disque (126) est fixé élastiquement, dans sa direction circonférentielle, dans un carter (107) et actionne, lorsqu'il dépasse un couple prédéterminé, un interrupteur de fin de course.

27. Dispositif d'entraînement en rotation selon la revendication 26, caractérisé par le fait que le disque (126) est fixé, dans sa direction circonférentielle, dans un carter (107) à l'aide d'un dispositif de mesure à jauge extensométrique (174).

28. Dispositif d'entraînement en rotation suivant la revendication 25 à 27, caractérisé par le fait que le dispositif de mesure à jauge extensométrique (164) commande un interrupteur pour le moteur (12).

29. Dispositif d'entraînement en rotation suivant la revendication 1 ou l'une des suivantes, caractérisé par un moteur électrique (12) comportant une partie d'alimentation en courant munie d'un contacteur, d'une minuterie, d'un système de protection bimétallique et, lorsque cela est nécessaire, d'une résistance additionnelle pour limiter le couple pour chaque phase, la résistance additionnelle étant conçue pour une charge thermique de brève durée (par exemple 6 secondes) et étant montée, avec de faibles dimensions hors-tout, de manière à pouvoir être aisément remplacé par une autre résistance possédant une valeur ohmique différente.

30. Dispositif d'entraînement en rotation suivant la revendication 29, caractérisé par le fait que la partie d'alimentation en courant comporte deux contacteurs à bascule et deux touches d'actionnement (marche, arrêt), ainsi qu'au moins un élément de mesure servant à mesurer le courant du moteur est disposé dans une ligne d'alimentation de ce dernier, qu'il est prévu une seconde minuterie, qui permet un réglage d'un temps de temporisation plus court que l'autre minuterie, que la seconde minuterie est reliée à l'élément de mesure et que par la liaison est activé un circuit d'affichage lorsqu'un accroissement de courant est présent entre le second et le premier réglage du temps.

31. Dispositif d'entraînement en rotation suivant la revendication 30, caractérisé par le fait qu'à la liaison est accouplé un dispositif d'arrêt du moteur, réalisant un arrêt retardé d'une seconde ou moins, et qui est en outre activé par la première minuterie pour réaliser l'arrêt.

32. Dispositif d'entraînement en rotation suivant la revendication 31, caractérisé par le fait qu'un dispositif de blocage des touches d'actionnement est accouplé au circuit d'affichage.

33. Dispositif d'entraînement en rotation suivant la revendication 30, 31 ou 32, caractérisé par le fait que les minuteries possèdent des systèmes de réglage du temps.

34. Dispositif d'entraînement en rotation suivant la revendication 1 ou l'une des suivantes, caractérisé par un dispositif d'entraînement manuel à disque (12a) monté à la place d'un ventilateur du moteur, et éventuellement avec un élément à quatre pans extérieurs/un élément à quatre pans intérieurs/un élément à six pans extérieurs.

FIG 1

FIG 2

FIG 3

FIG 4

FIG 5

FIG 6

EP 0 250 852 B1

FIG 7

FIG 8

FIG 9

FIG 11

FIG 10

FIG 12

FIG 14

FIG 13

FIG 15

FIG 16

FIG 17

FIG 18

FIG 19

FIG 20

FIG 21